# EUROPEAN PATENT APPLICATION

(11) **EP 4 670 589 A1**
(43) Date of publication of application: **31.12.2025**
(21) Application number: 25184472.6
(22) Date of filing: 23.06.2025
(51) Int. Cl.: A47J 43/04, A23G 9/22, A23G 9/28, A47J 43/07, B01F 23/41

(54) **MACHINE FOR MAKING AND DISPENSING FOOD EMULSIONS**

(30) Priority: 24.06.2024 IT 202400014497
(71) Applicant: Ali Group S.r.l. - Carpigiani, 20063 Cernusco sul Naviglio, Milano (IT)
(72) Inventor: LAZZARINI, Roberto, 42100 Reggio Emilia (IT); TASSI, Federico, 40122 Bologna (IT)
(74) Representative: Milli, Simone

(57) **Abstract**

A machine for making and dispensing food emulsions, comprising, in combination:
- a containing receptacle (4);
- a product processing system (5) comprising at least:
- a texturizer (52);
- a pump (51) connected, at the inlet end, to the containing receptacle (4) and, at the outlet end, to the texturizer (52);
- a dispensing device (87) comprising a delivery duct (6), connected to the texturizer (52), and having a delivery port (61) for delivering the emulsified product,

the machine (1) being **characterized in that** the dispensing device (87) comprises:
- a first chamber (40), associated with a portion of the delivery duct (6); a plug member (43), disposed inside said first chamber (40) and movable between a delivery duct (6) open position (P1) and a delivery duct (6) closed position (P2);
- and a diaphragm (41) connected to the plug member (43) and defining a separating wall of said first chamber (40).

## Description

The present invention relates to a machine for making and dispensing food emulsions.

In particular, the present innovation refers to machines for making and dispensing food emulsions, such as whipped cream, semifreddo desserts, creams, and sweet and savory mousses.

The principles of emulsion technology are commonly used in the food industry to create a wide variety of products. The rheological behaviors of food emulsions vary greatly according to the nature of the food; indeed, they can be viscous liquids, viscoelastic liquids, viscoelastic solids, plastics, or elastic solids according to their compositions, structures, and interactions. The nature of emulsions confers specific functional characteristics to the food, such as desirable appearance, consistency, texture and flavor profiles.

From a chemical-physical point of view, an emulsion is a mixture of two or more liquids, usually mutually immiscible, which, by means of specific transformation processes, take on a homogeneous appearance at macroscopic level while maintaining a heterogeneous appearance at microscopic level.

Therefore, in general, an emulsion is an atomized liquid in droplet form, dispersed phase, dispersed in another liquid, continuous phase, and characterized by a non-static and thermodynamically unstable internal structure.

A particularly felt need in the industry at issue is to have a machine for making and dispensing food emulsions, which is simple and at the same time requires little intervention, in terms of cleaning.

It is the purpose of the present invention to make a machine for processing and dispensing food emulsions which meets the aforesaid need.

In particular, it is the purpose of the present invention to make a machine for processing and dispensing food emulsions which is simple and capable of minimizing the interventions from the point of view of cleaning.

Said purpose is fully achieved by the machine of the present invention, which is characterized by the claims hereinbelow.

The features of the invention may be clearly found in the contents of the claims hereinbelow and the advantages thereof will become more apparent from the following detailed description, made with reference to the accompanying drawings that show an embodiment merely given by way of non-limiting example, in which:

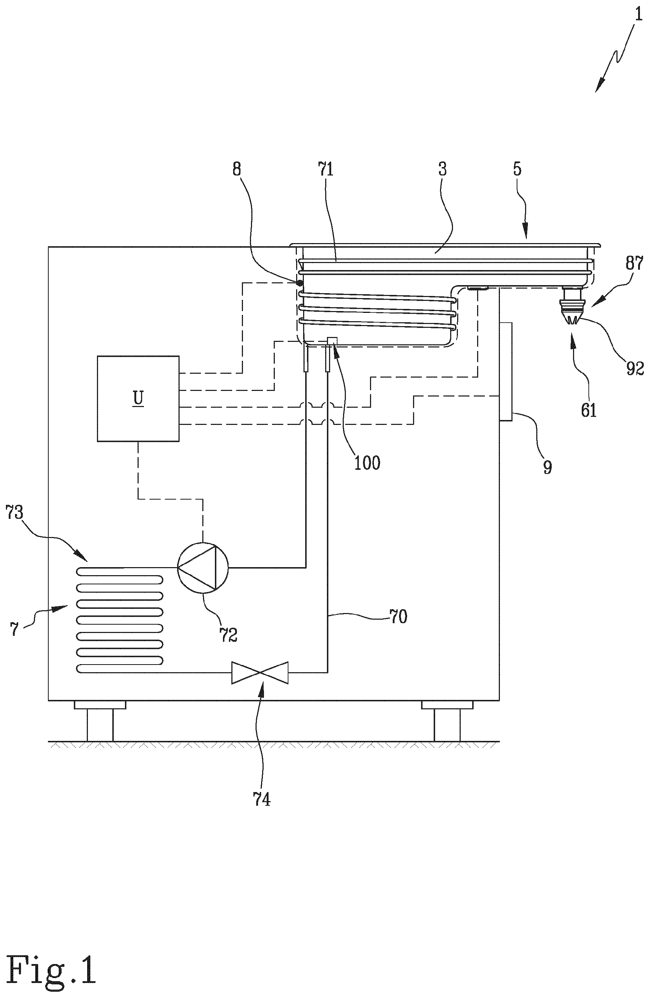

- figure 1 diagrammatically shows a front view of a machine according to the present invention;

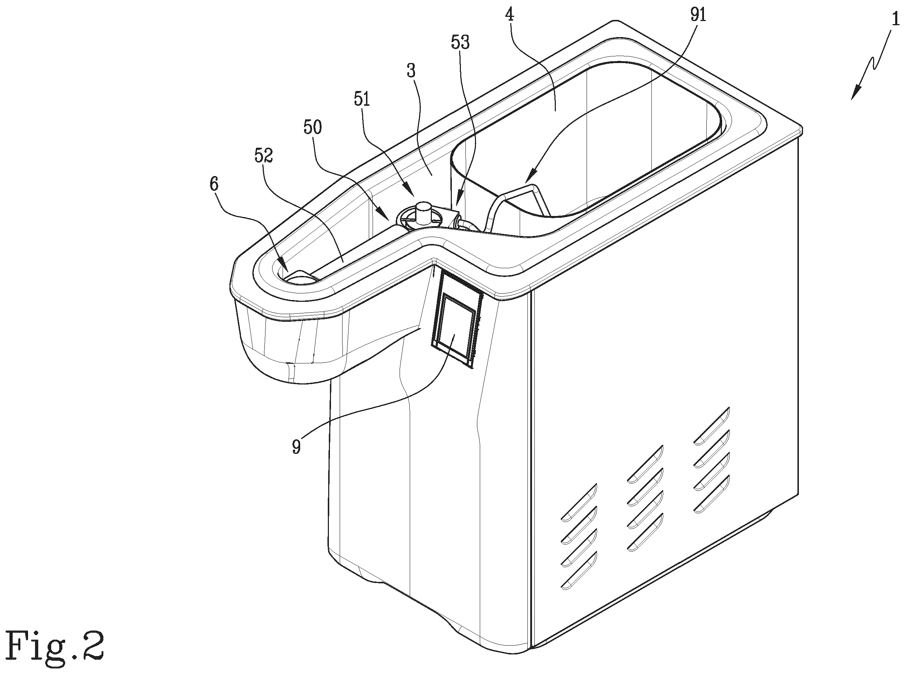

- figure 2 diagrammatically shows a perspective view of the machine of the present invention;

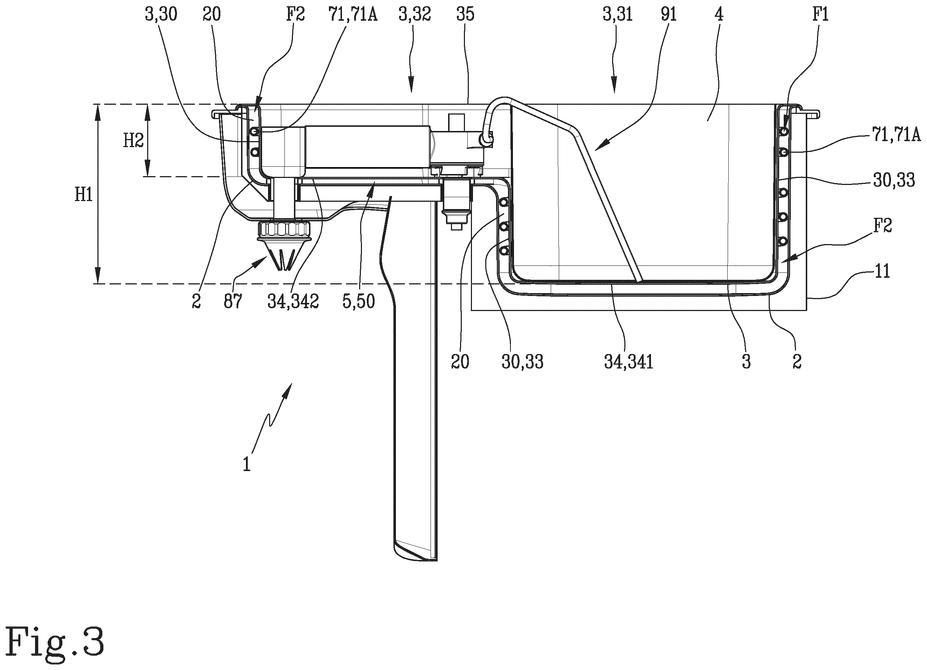

- figure 3 diagrammatically shows a section view of a detail of the machine of the present invention;

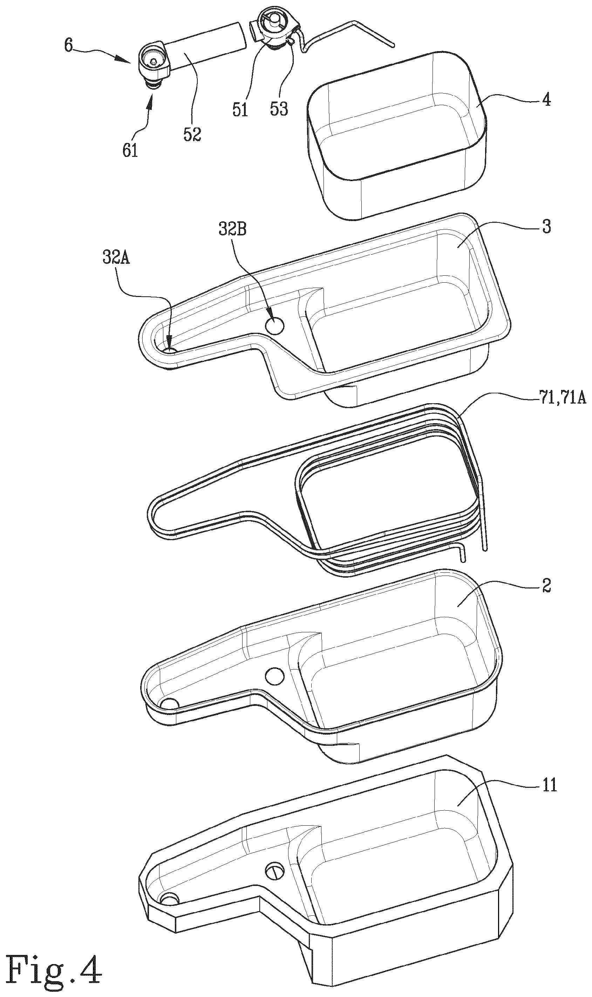

- figure 4 diagrammatically shows an exploded view of a part of the machine of the present invention;

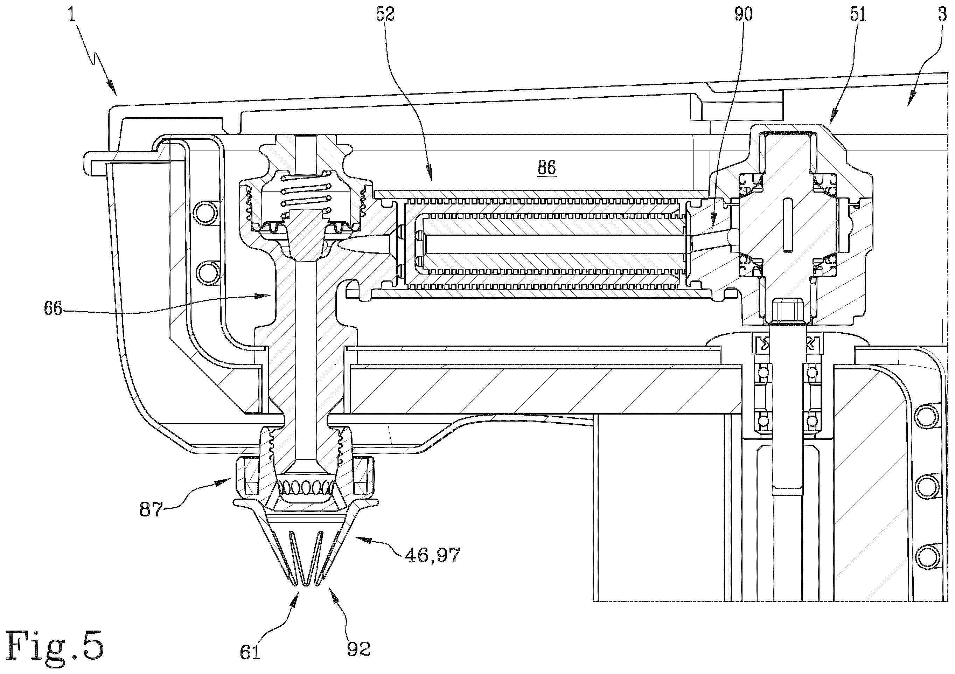

- figure 5 shows a section view of part of the machine of the preceding figures;

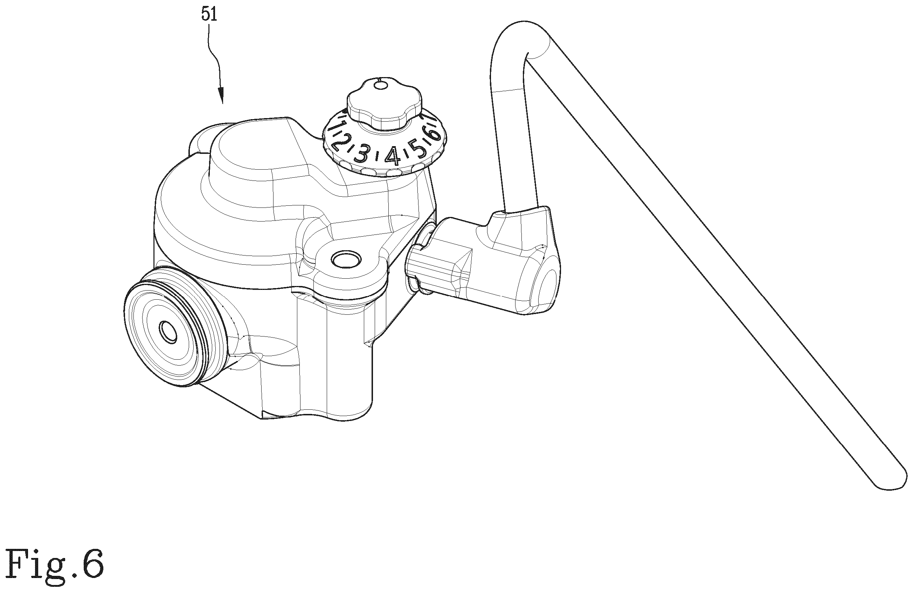

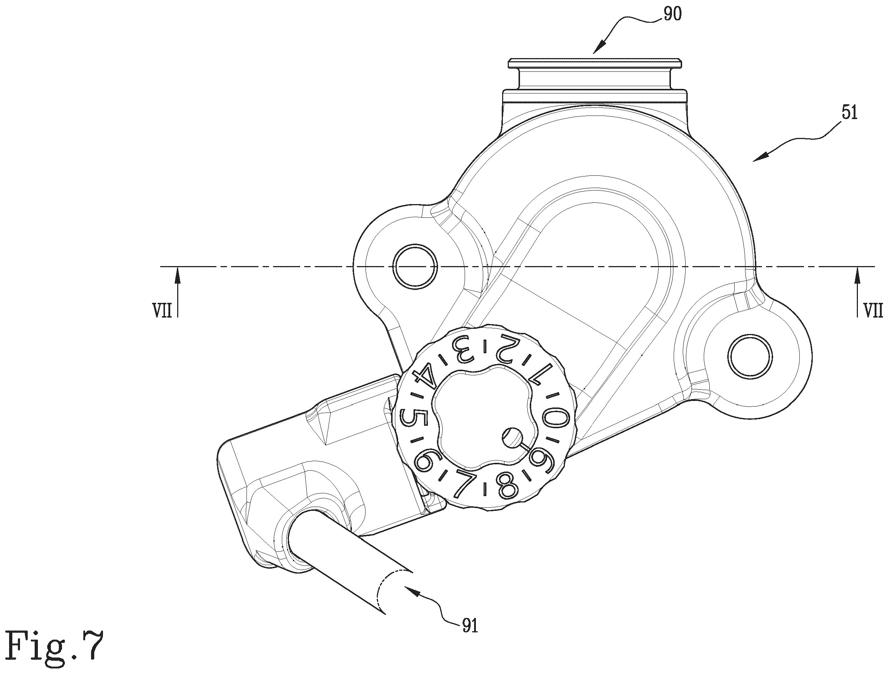

- figures 6 and 7 respectively show perspective and plan views of a detail of the machine of the present invention;

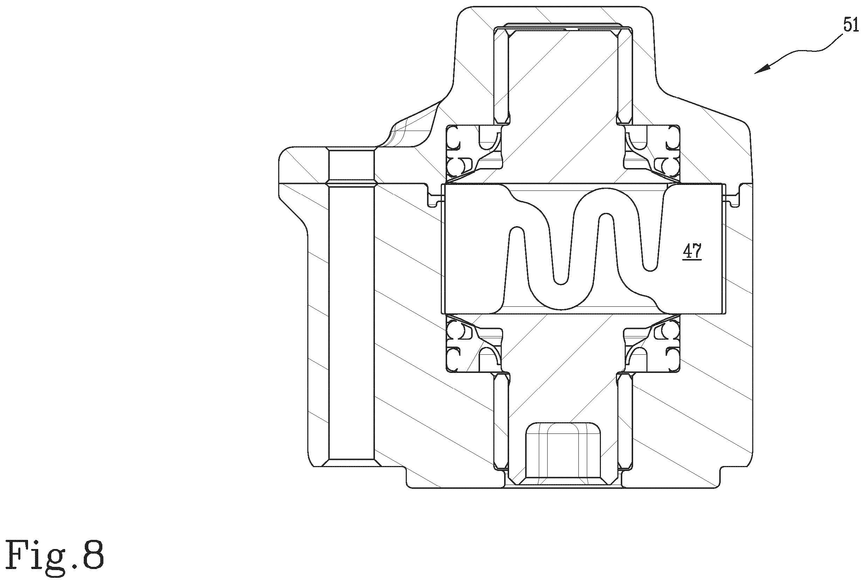

- figure 8 shows a section view taken along section plane VII-VII of the detail of figures 6 and 7,

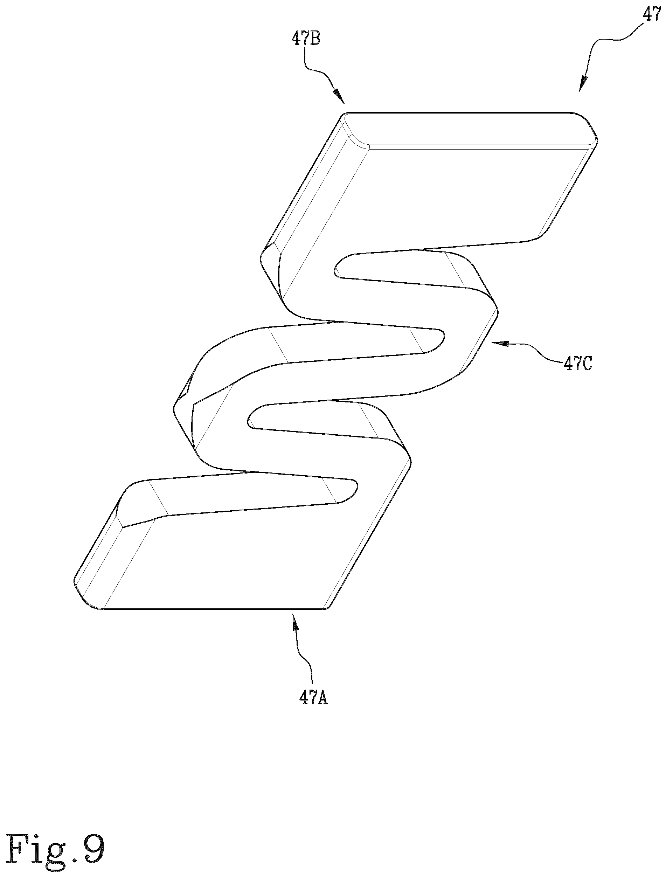

- figure 9 shows a perspective and enlarged view of a component of the detail in figures 6-8;

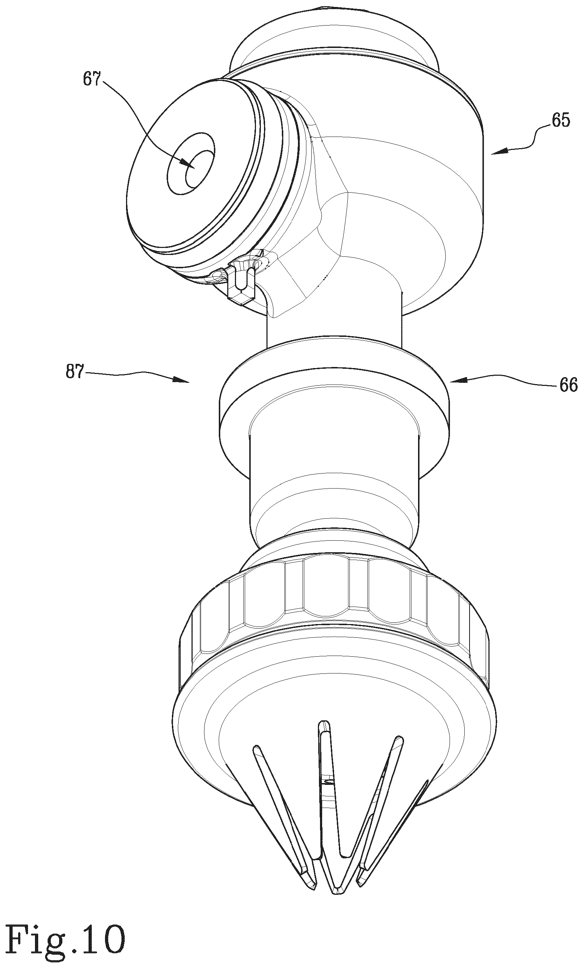

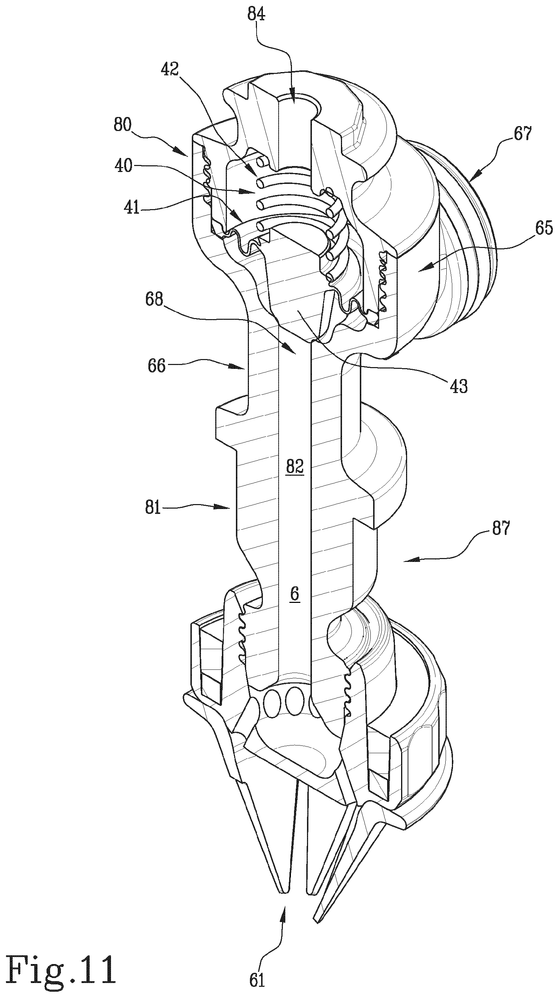

- figures 10 and 11 show perspective and section views, respectively, of a further detail of the machine object of the present invention;
- figures 12 and 13 show an enlarged and in section view, respectively, of the detail shown in figures 10 and 11;

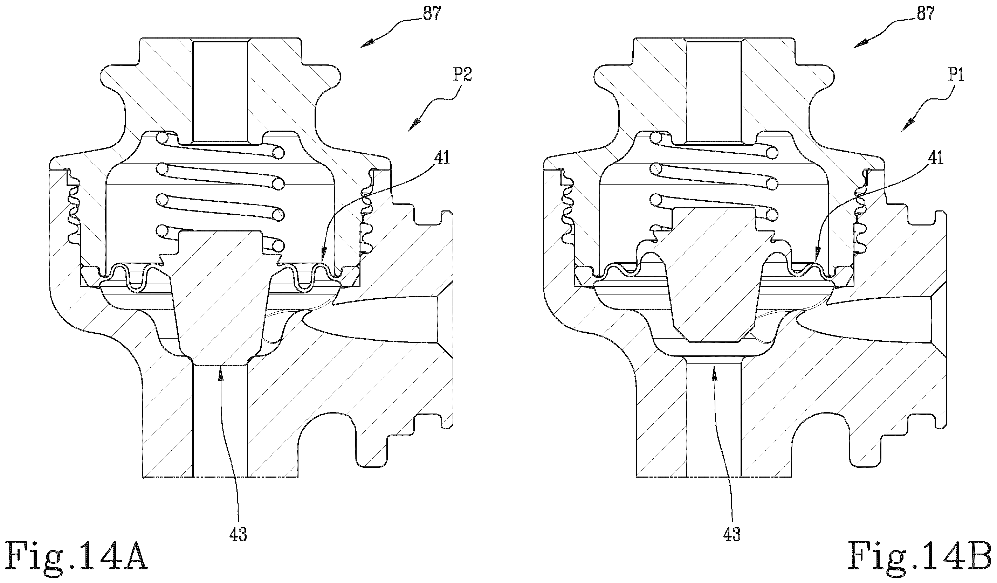

- figures 14A and 14B show the detail in figures from 10 to 13 in different positions.

It is worth noting that the figures are diagrammatic and therefore not representative of the actual size of the system.

With reference to the combined figures, reference numeral 1 indicates, as a whole, a food processing machine, in particular for making, treating and dispensing food emulsions.

The aforesaid food emulsions can be, for example, whipped cream, creams and the like.

According to the invention, the machine 1 comprises a containing receptacle 4 of the product to be emulsified.

According to another aspect, the machine 1 for processing liquid or semiliquid food products, also indicated more simply as machine 1 in the description, comprises a tank 3.

According to another aspect, the machine comprises a containment body 2.

Preferably, the tank 3 is arranged inside the containment body 2.

The tank 3 is provided with walls having an outside surface 30.

According to another aspect, the machine 1 comprises an insulating body 11 configured to contain the containment body 2 to insulate it thermally from the outside.

The machine 1 may comprise on the top a removable cover, not shown in the accompanying figures, to prevent access to the tank 3.

Preferably, the containing receptacle 4 is disposed inside the tank 3.

In a preferred embodiment, the containing receptacle 4 is removable.

In other words, it is possible to remove the containing receptacle 4 from the tank 3 and reinsert it into the tank 3 itself, as needed.

Advantageously, the possibility to remove the containing receptacle 4 from the tank 3 facilitates the cleaning operations.

According to the present invention, the machine 1 comprises a processing system 5.

Preferably but not limitedly, the processing system 5 is disposed inside the tank 3.

The processing system 5 comprises at least one pump 51 connected to the containing receptacle 4 and a texturizer 52.

The pump 51 and the texturizer 52 define a product processing circuit 50.

The product passes through along the processing circuit 50 in order: the pump 51, the texturizer 52.

The pump 51 is configured to aspirate the product from the containing receptacle 4 and push the product towards the texturizer 52.

Preferably, the product to be emulsified, aspirated by the pump 51, is in liquid form, e.g., liquid cream.

In an embodiment, the pump 51 is a positive displacement pump, specifically a rotating positive displacement pump capable of varying the rotation frequency and, consequently, the flow rate and/or supply pressure of the food product to be sent to the texturizer 52.

The positive displacement pump can be either of the blade or impeller type. The machine 1 comprises a motor, not shown in the accompanying figures, configured to actuate the pump 51.

The texturizer 52 is preferably a texturizer tube.

Preferably, the processing system 5 comprises an adjustment valve 53 arranged along the processing circuit 50.

The adjustment valve 53 is configured to adjust an amount of air introduced into the processing circuit 50.

In an embodiment, the adjustment valve 53 is manual.

The machine 1 comprises an actuator, not shown in the accompanying figures, configured to introduce air into the processing circuit 50 through the adjustment valve 53.

In particular, the air introduced into the processing circuit 50 by means of the adjustment valve 53 joins the product aspirated by means of the pump 51.

To further clarify, air is introduced into the circuit 50 by means of the adjustment valve 53 and the liquid product is aspirated from the containing receptacle 4 by means of the pump 51.

The pump 51 is configured to push the aspirated air and product assembly toward the texturizer 52 along the processing circuit 50.

The texturizer 52 allows the mixture consisting of liquid product and air to increase in volume.

The adjustment valve 53, in particular, is configured to adjust the amount of air per unit of liquid product.

Advantageously, adjusting the amount of air per unit of liquid allows controlling the increase in volume in the final product.

Considering the example in which the containing receptacle 4 contains liquid cream, adjusting the amount of air per unit of liquid cream allows controlling the increase in volume of the final whipped cream.

According to the present innovation, the machine 1 comprises a delivery duct 6 connected to the texturizer 52.

To clarify further, the processing circuit 50 flows into the delivery duct 6: the texturized product exiting the texturizer 52 enters the delivery duct 6.

Preferably, at least a portion of the delivery duct 6 is disposed inside the tank 3.

The delivery duct 6 has a delivery port 61 of the emulsified product.

In a preferred embodiment, the delivery port 61 is removable.

Advantageously, the adjustable delivery port 61 allows the texture and shape of the final product to be modified.

According to an aspect of the description, the delivery duct 6 comprises a delivery mouth 92 for adjusting the opening of the delivery port 61.

Preferably, the delivery mouth 92 is removable.

Advantageously, the delivery mouth 92 can be replaced with another delivery mouth 92 of a different shape, for example, for adjusting the opening of the delivery port 61.

In other words, the delivery port 61 can be adjusted by replacing the delivery mouth 92 with another delivery mouth 92 of a different shape.

Advantageously, the replaceable delivery mouth 92 allows the texture and shape of the final product to be changed quickly.

Advantageously, the ability to remove the delivery mouth 92 facilitates its cleaning.

Some specific aspects of the invention will now be described in greater detail.

According to an aspect, the machine comprises a dispensing device 87. The dispensing device 87 comprises the delivery duct 6.

According to an aspect, the machine 1 comprises a first chamber 40, concerning a portion of the delivery duct 6 and provided inside with a plug member 43 movable between an open position of said delivery duct 6 and a closed position of said delivery duct 6, and a diaphragm 41 connected to the plug member 43.

The chamber 40, the diaphragm 41 and the movable plug member 43 are part of the dispensing device 87.

Advantageously, it is worth noting that the diaphragm 41 prevents the product from leaking outside the zone of the first chamber 40 in which the duct 6 is disposed during the movement of the plug member 43.

It is worth noting that said diaphragm 41 is arranged peripherally relative to the plug member 43.

Advantageously, the diaphragm 41 defines a separation wall (internal) to the first chamber 40, so as to isolate a portion of the chamber 40, concerned by the delivery duct 6.

More precisely, the diaphragm 41 defines a portion of the wall of the duct 6, inside the chamber 40.

According to another aspect, the machine 1 further comprises a spring 42, arranged inside said first chamber 40 and acting on said plug member 43 to keep it in the closed position.

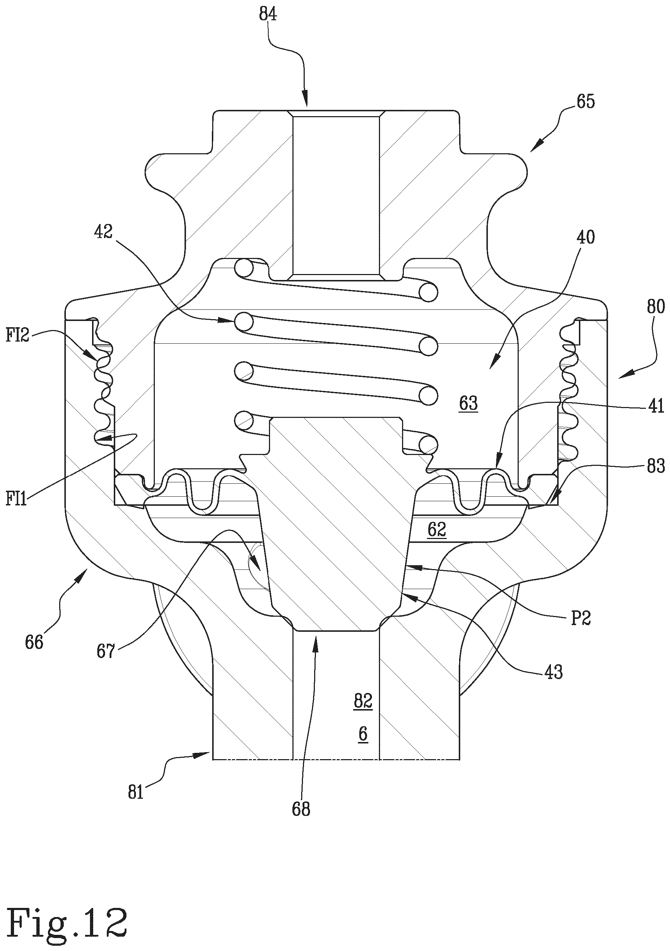

The structure of the first chamber 40 will now be better described with reference to figure 12.

The first chamber 40 is defined by a first casing 65 and a delivery body 66 (forming part of the dispensing device 87).

The first casing 65 is configured to mate, preferably by screwing, with the delivery body 66.

It is worth noting that the first chamber 40 has an inlet 67 and an outlet 68 of the delivery duct 6 (more precisely of a portion of the delivery duct 6).

More specifically, the inlet 67 is preferably lateral relative to the delivery body 66, i.e., to the first chamber 40.

Furthermore, the outlet 68 is preferably arranged inferiorly, in the delivery body 66, i.e., in the first chamber 40.

The plug member 43 is configured to engage with said outlet 68 so as to close it or open it.

Preferably, the delivery body 66 is shaped as a goblet, having a cup-shaped (upper) portion 80 and an elongated (lower) portion 81.

Preferably, the inlet 67 is in the (upper) cup-like portion 80.

Preferably, the outlet 68 is in the (upper) cup-like portion 80.

The elongated (lower) portion 81 has a channel 82, defining a portion of the delivery duct 6.

The outlet 68 leads into the channel 82.

It is worth noting that the (upper) cup-shaped portion 80 comprises an abutment zone 83 of the diaphragm 41.

Substantially, the diaphragm 41 abuts, i.e., contacts, the delivery body 66 at the abutment zone 83 of the diaphragm 41.

This zone 83 is defined by an annular shoulder of the delivery body 66.

It is worth noting that the delivery body 66 preferably comprises a threaded zone FI1.

Furthermore, the first casing 65 comprises a threaded zone FI2, configured to engage the threaded zone FI1 of the delivery body 66 by screwing.

It is worth noting that the diaphragm 41 is interposed between the delivery body 66 and the casing 65, more precisely pressed between them (at the abutment zone 83).

Therefore, the diaphragm 41 divides the first chamber 40 into a first portion 62 and a second portion 63.

The delivery duct 6 concerns the first portion 62.

It is worth noting that the second portion 63 is an isolated region from the first portion 62, i.e., the diaphragm 41 guarantees that the product cannot enter the second portion 63, leaking out of the latter, e.g., to the outside.

According to another aspect, the casing 65 comprises a hole 84.

It is worth noting that the actuating body 43 is substantially moved between the closed position P2 and the open position P1 by the liquid product pressure applied by the pump 51.

In other words, the activation of the pump 51 causes the actuating body 43 to move between the closed position P2 and the open position P1 (overcoming the resistance offered by the spring 42), opening the delivery duct 6 to allow the dispensing of the product itself.

It is worth noting that the spring 42 is operationally active between casing 65 and the plug member 43.

More precisely, the spring 42 is arranged in the second portion 63 of the first chamber 40.

The spring 42 contacts, at one end, the plug member 43 and at the other end the casing 65.

In another aspect, it is worth noting that the diaphragm 41 has an S-shaped cross-section.

In other words, the diaphragm 41 radially defines a series of zones at different heights.

It is worth noting that the diaphragm 41 is preferably elastically deformable.

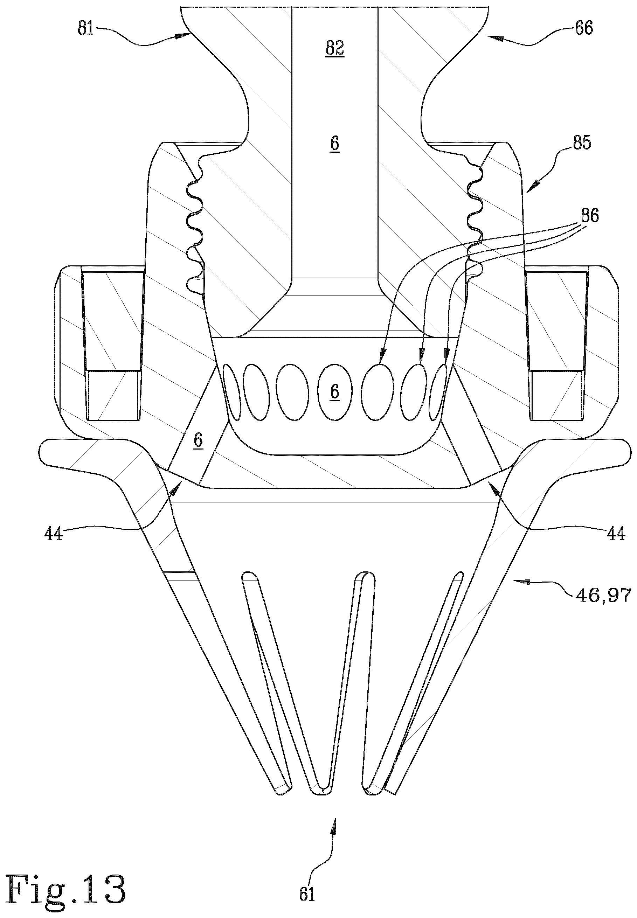

With reference to figure 13, it is worth noting that the machine 1 comprises a dispenser body 46 having a nozzle 97 disposed at an outlet end 44 of the delivery duct 6.

Thus, it is worth noting that the dispenser body 46 is removable relative to said delivery duct 6.

Furthermore, it is worth noting that the machine comprises a coupling body 85.

The coupling body 85 defines a portion of the delivery duct 6.

More specifically, the coupling body 85 comprises a plurality of (radial) orifices 86, defining the aforementioned portion of the delivery duct 6.

The coupling body 85 comprises a cavity 86.

The delivery body 66 is inserted inside the cavity 86.

It is worth noting that the delivery body 66 (more precisely the elongated portion 81) is screwed to the coupling body 85.

According to another aspect, at least one between the dispenser body 46 and the outlet end 44 of the delivery duct 6 is made of a magnetic or magnetizable material.

Advantageously, the dispenser body 46 can be attached, and detached, easily from the delivery port 6 in this manner.

More precisely, the dispenser body 46 can be easily attached, and detached, from the coupling body 85.

Thus, it is worth noting that the dispenser body 46 can be made of magnetic material and the outlet end 44 of the delivery duct 6 of ferromagnetic material.

It is worth noting that the dispenser body 46 corresponds to the preceding delivery mouth 92.

Another aspect of the invention will now be described.

The pump 51 comprises a blade 47 having two lateral ends, a first lateral end 47A and a second lateral end 47B.

Furthermore, the blade 47 comprises a serpentine-shaped central portion 47C, connecting said first lateral end 47A and second lateral ends 47B. The blade 47 is connected to a rotor, to be driven in rotation.

The pump 51 has an inlet 91 and an outlet 90.

According to the present invention, the machine 1 comprises a refrigeration system 7.

The refrigeration system 7 comprises a closed circuit 70 configured for circulating a first heat exchanger fluid F1, an evaporator 71, a compressor 72, a condenser 73 and a throttle element 74.

The first heat exchanger fluid F1 passes through along the closed circuit 70 in the order: evaporator 71, compressor 72, condenser 73 and throttle element 74.

Preferably, the first heat exchanger fluid F1 consists of CO2 or propane.

The evaporator 71 is in contact with the outside surface 30 of the walls of the tank 3 to operate a cooling of the walls of the tank 3 itself.

Preferably, the tank 3 has a lateral surface 33 and the evaporator 71 is in contact with the lateral surface 33 of the tank 3.

Preferably, the lateral surface 33 of the tank 3 has flat walls.

In a preferred embodiment, the evaporator 71 consists of a serpentine 71A. Preferably, the serpentine 71A extends about the lateral surface 33 of the tank 3.

The evaporator 71 consists of helically wound pipes according to the shape of the tank 3.

In a preferred embodiment, the tank 3 comprises a first portion 31 having, along the vertical, a first depth H1 and a second portion 32 having, along the vertical, a second depth H2.

The first depth H1 is greater than the second depth H2.

To clarify further, the tank 3 has a bottom wall 34 and an upper edge 35, which delimit the access perimeter to the tank 3 itself.

The bottom wall 34 of the tank 3 consists of a first bottom wall 341, at the first portion 31, and a second bottom wall 342, at the second portion 32: the distance between the upper edge 35 and the first bottom wall 341 corresponds to the first depth H1 and the distance between the upper edge 35 and the second bottom wall 342 corresponds to the second depth H2.

Preferably, the containing receptacle 4 is arranged at the first portion 31 of the tank 3 and the processing system 5 is disposed at the second portion 32 of the tank 3.

In an embodiment, the containing receptacle 4 is defined by a portion of the tank 3.

In particular, in this embodiment, the containing receptacle 4 is defined by the first portion 31 of the tank 3.

Advantageously, the evaporator 71 in contact with the outside surface of the tank 3 allows a heat exchange with the product being processed for making and dispensing the emulsion from the containing receptacle 4 to the texturizer 52 or to the delivery duct 6, i.e., up to the delivery point of the finished product.

According to an aspect of the description, the second portion 32 has a first opening 32A configured to accommodate the delivery duct 6.

In other words, the delivery duct 6 passes through the first opening 32A.

According to an aspect of the description, the second portion 32 has a second opening 32B configured to accommodate connection and transmission elements between the processing system components 5 and respective motors. In other words, these connecting and transmitting elements pass through the second opening 32B.

It is worth noting that the containment body 2 and insulating body 11 also have respective openings at the first opening 32A and second opening 32B. According to the present invention, the machine 1 comprises a cooling chamber 20 of the tank 3.

In particular, according to an aspect of the present invention, the refrigeration system 7 comprises the cooling chamber 20 of the tank 3.

The cooling chamber 20 extends about the tank 3 between the outside surface 30 of the tank 3 and the containment body 2.

In other words, the cooling chamber 20 substantially corresponds to the space defined between the containment body 2 and the outside surface 30 of the tank 3.

The cooling chamber 20 is configured to enclose the evaporator 71 therein. To clarify further, the evaporator 71 is inside the cooling chamber 20 and is disposed between the containment body 2 and the outside surface 30 of the tank 3.

It is worth noting that the cooling chamber 20 surrounds the entire tank 3 and, therefore, both the first portion 31 of the tank 3 and the second portion 32 of the tank 3.

In other words, the cooling chamber 20 surrounds the tank 3 at both the containing receptacle 4 and the processing system 50.

According to an aspect of this description, the cooling chamber 20 is permeated with a second heat exchanger fluid F2 to increase the thermal inertia of the evaporator 71.

In other words, the second heat exchanger fluid F2 defines a heat exchanger fluid mass, substantially confined in a closed chamber, such as the cooling chamber 20, which increases the thermal inertia, effectively making the cooling of the tank 3 more stable and efficient.

To clarify further, the evaporator 71 is embedded in the second heat exchanger fluid F2 to ensure optimal heat exchange between the first heat exchanger fluid F1, which circulates inside the evaporator 71, and the inside surface of the tank 3.

The second heat exchanger fluid F2 preferably consists of a diathermic fluid, such as ethylene glycol or propylene glycol.

The heat exchange mechanism between the first heat exchanger fluid F1 and the product occurs as follows.

The evaporator 71 exchanges heat with the tank 3 by means of direct contact (in some zones) with the outside surface 30 of the same tank 3 and further exchanges heat with the second heat exchanger fluid F2, so that the second heat exchanger fluid F2 cools, further cooling the outside surface 30 in certain zones. By conduction, the cooling of the outside surface 30 allows the inside surface of the tank 3, and consequently both the containing receptacle 4 and the elements of the processing system 5 to be cooled as well. By conduction, the cooling of the containing receptacle 4 and elements of the processing system 5 also allows the product contained therein to be cooled.

It is worth noting that the action of the second heat exchanger fluid F2 thus increases the overall heat exchange efficiency between the evaporator 71 and the inside surface of the tank 3 and, consequently, between the evaporator 71 and the product (otherwise the heat exchange would have occurred only at the point of contact between the evaporator 71 and the outside surface 30 of the walls of the tank 3).

In other words, the heat exchange with the product being processed is optimized throughout the making and dispensing of the emulsion starting from the containing receptacle 4 to the texturizer 52 or to the delivery duct 6.

Advantageously, the heat exchange with the product being processed is optimized in each portion of the machine 1 containing the product.

Advantageously, in particular, the heat exchange with the product is optimized up to the delivery point of the emulsified product.

Advantageously, the cooling chamber 20 permeated by the second heat exchanger fluid F2 allows the temperature of the product being processed to be equalized up to the delivery point.

Preferably, the cooling chamber 20 permeated with the second heat exchanger fluid F2 is configured to keep the temperature of the emulsified end product constant comprised within a range of -5°C to 10°C, more preferably between -1°C and 7°C.

According to an aspect of the description, the second heat exchanger fluid F2 is in contact with the outside surface 30 of the tank 3 for cooling the tank walls.

It is worth noting that, also by virtue of the second heat exchanger fluid F2, the entire outside surface 30 of the tank 3 is cooled by contact on the entire outside surface 30, advantageously increasing the heat exchange.

To clarify further, the second heat exchanger fluid F2 provides thermal inertia; indeed, this fluid defines a mass of liquid that, being at a predetermined temperature, can equalize and stabilize the temperature of what is inside tank 3.

Advantageously, the cooling of the tank 3 by means of the second heat exchanger fluid F2, disposed inside the cooling chamber 20, provides greater uniformity than cooling exclusively by means of the evaporator 71. Indeed, the heat exchanger fluid F2 is diffused within the entire cooling chamber 20 and thus guarantees a heat transfer, in the cooling chamber 20, to all the portions of the outside surface 30 of the tank 3 which are not in direct contact with the evaporator 71. This results in a better ability to equalize temperature over the entire inside surface of the tank 3.

Preferably, the second heat exchanger fluid F2 is in contact with a portion of the outside surface 30 of the tank 3 corresponding to the lateral surface 33 of the tank 3 itself.

According to an aspect of the description, the machine 1 comprises a control unit U configured to control at least the refrigeration system 7.

In particular, the control unit U is configured for controlling the actuation of the compressor 72.

In an embodiment, the control unit U is configured for controlling the adjustment valve 53.

In this embodiment, the adjustment valve 53 is a solenoid valve and the control unit U is configured to control the adjustment valve 53 to adjust the flow of air introduced into the processing circuit 50.

The control unit U is preferably configured to control the actuator configured for introducing air into the processing circuit 50 through the adjustment valve 53.

The control unit U can be configured to control the pump 51, for adjusting the flow of product aspirated from the containing receptacle 4 and pushing the product towards the texturizer 52.

According to an aspect of the description, the machine 1 comprises a (first) temperature sensor 8 disposed inside the cooling chamber 20.

The temperature sensor 8 is configured to detect a temperature of the second heat exchanger fluid F2.

The temperature sensor 8 is connected to the control unit U to send it a signal regarding the temperature of the second heat exchanger fluid F2.

According to an aspect of the description, the control unit U is configured to control the refrigeration system 7 according to the signal received from the temperature sensor 8 relative to the temperature of the second heat exchanger fluid F2.

In particular, the control unit U is configured to control the compressor 72 as a function of the signal received from the temperature sensor 8 relating to the temperature of the second heat exchanger fluid F2.

According to another aspect, the machine 1 comprises a further (second) temperature sensor 100, disposed at the bottom of the containing receptacle 4.

The temperature sensor 100 is configured to detect a temperature of the bottom of the containing receptacle 4.

According to an aspect of the description, the control unit U is configured to control the refrigeration system 7 (in particular, the compressor 72) according to the signal received from the temperature sensor 8 relative to the temperature of the second heat exchanger fluid F2 and/or according to the signal received from the temperature sensor 100, disposed on the bottom of the containing receptacle 4.

It is worth noting that, advantageously, the fact of controlling the compressor based on a double signal, respectively the signal from sensor 8 and sensor 100, allows achieving greater reliability and performance.Advantageously, the control unit U, by controlling the compressor 72, can control the circulation of the first heat exchanger fluid F1 through the closed circuit 70.

Advantageously, the control of the refrigeration system 7 by means of the control unit U allows the temperature of the product being processed to be controlled and thus guarantee the stability of the emulsion being processed.

Advantageously, the control of the refrigeration system 7 by means of the control unit U as a function of the signal received from the temperature sensor 8 allows the temperature of the emulsion being processed to be adjusted in automatic or semi-automatic manner.

In an embodiment, the machine 1 comprises a user interface 9 connected to the control unit U.

The user interface 9 comprises at least one command activatable by a user.

Preferably, the user interface 9 comprises a plurality of commands activatable by a user.

Preferably, the user interface 9 comprises commands and/or activation and selection buttons activatable by a user.

Advantageously, the user interface 9 allows displaying information related to the machine 1 and/or to the product being processed, such as, for example, the temperature of the second heat exchanger fluid F2, even in real time.

Advantageously, by means of the user interface 9, in conjunction with the control unit U, various aspects of the machine 1 can be controlled such as, for example, the power supply and output of the compressor 72, for adjusting the emulsion temperature, the adjustment valve 53, for adjusting the air flow fed into the processing circuit 50, the actuator configured to introduce air into the processing circuit 50 through the adjustment valve 53, the actuation of the pump 51 by means of the respective motor, for adjusting the flow of product aspirated from the containing receptacle 4 and pushing the product towards the texturizer 52.

Advantageously, the user interface 9, in conjunction with the control unit U, allows an operator to set different thermal cycles to perform a plurality of different preparations.

According to another aspect, the pump 51 is arranged inside the tank 3 in a region 86 cooled by the evaporator 71.

According to a further aspect, the delivery duct 6 is at least partially disposed in the tank 3 in a region 86, cooled by theevaporator 71.

According to another aspect, the texturizer 52 is disposed inside the tank 3 in the region 86 cooled by the evaporator 71.

It is worth noting that, advantageously, the fact that the components of the processing system 5 are disposed in the region 86 cooled by theevaporator 71 means that the product can be dispensed and made while minimizing the bacterial load inside it, since the system components are always kept at a low temperature, so as to minimize any food safety risk.

## Claims

1. A machine for making and dispensing food emulsions, comprising, in combination:
- a containing receptacle (4);
- a product processing system (5) comprising at least:
- a texturizer (52);
- a pump (51) connected, at the inlet end, to the containing receptacle (4) and, at the outlet end, to the texturizer (52);
- a dispensing device (87) comprising a delivery duct (6), connected to the texturizer (52), and having a delivery port (61) for delivering the emulsified product,
the machine (1) being **characterized in that** the dispensing device (87) comprises:
- a first chamber (40), associated with a portion of the delivery duct (6);
- a plug member (43), disposed inside said first chamber (40) and movable between a delivery duct (6) open position (P1) and a delivery duct (6) closed position (P2);
- and a diaphragm (41) connected to the plug member (43) and defining a separating wall of said first chamber (40).

2. The machine according to the preceding claim, wherein the diaphragm (41) is fixed to the plug member (43) and is disposed peripherally relative to the plug member (43).

3. The machine according to either of the preceding claims, wherein the plug member (43) and the diaphragm (41) are made as one piece.

4. The machine according to any one of the preceding claims, also comprising a spring (42), disposed inside said first chamber (40) and acting on said plug member (43) to keep it at the closed position (P2).

5. The machine according to any one of the preceding claims, wherein the diaphragm (41) divides the first chamber (40) into a first portion (63) and a second portion (62), and wherein the delivery duct (6) is associated with the first portion (63).

6. The machine according to any one of the preceding claims, comprising a dispenser body (46) comprising a nozzle (97), located at an outlet end (44) of the delivery duct (6), said dispenser body (46) being removable from the delivery duct (6).

7. The machine according to the preceding claim, wherein at least one between the dispenser body (46) and the outlet end (44) of the delivery duct (6) is made of a magnetic or magnetizable material.

8. The machine according to any one of the preceding claims, wherein the pump (51) comprises a blade (47) having two lateral ends, a first lateral end (47A) and a second lateral end (47B), and a serpentine-shaped central portion (47C) connecting said first lateral end (47A) and second lateral end (47B).

9. The machine according to any one of the preceding claims, further comprising:
- at least one containment body (2);
- a tank (3) which houses the containing receptacle (4), and wherein the tank (3) is disposed inside the containment body (2).

10. The machine according to any one of the preceding claims and claim 9, further comprising:
- a refrigeration system (7), comprising: a closed circuit (70) configured for circulating a first heat exchanger fluid (F1), an evaporator (71), a compressor (72), a condenser (73) and a throttle element (74), the first heat exchanger fluid (F1) flowing in the closed circuit (70) through the following: the evaporator (71), the compressor (72), the condenser (73) and the throttle element (74), in that order; the evaporator (71) being in contact with the outside surface (30) of the walls of the tank (3) in order to cool the walls of the tank (3);
- a cooling chamber (20) for cooling the tank (3), extending around the tank (3) between the outside surface (30) of the tank (3) and the containment body (2), the cooling chamber (20) being configured to enclose the evaporator (71) within it.

11. The machine according to any one of the preceding claims and claim 10, wherein the pump (51) is disposed inside the tank (3), in a region (86) which is cooled by the evaporator (71).

12. The machine according to any one of the preceding claims and claim 10, wherein the delivery duct (6) is at least partly disposed in a region (86) inside the tank (3) which is cooled by the evaporator (71).

13. The machine according to any one of the preceding claims and claim 10, wherein the texturizer (52) is disposed inside the tank (3), in a region (86) which is cooled by the evaporator (71).

14. The machine according to any one of the preceding claims, wherein said diaphragm (41) defines a portion of a wall of the delivery duct (6).
